Europäisches Patentamt

(19) European Patent Office

Office européen des brevets

(11) Numéro de publication: **0 237 456**
**B1**

(12) **FASCICULE DE BREVET EUROPEEN**

(45) Date de publication du fascicule du brevet:
**27.12.89**

㊾' Int. Cl.⁴: **F16K 17/04, F16K 47/00**

(21) Numéro de dépôt: **87440013.8**

(22) Date de dépôt: **10.03.87**

(54) Amortisseur hydraulique de battements et son application aux soupapes et analogues.

(30) Priorité: **11.03.86 FR 8603548**

(43) Date de publication de la demande:
**16.09.87 Bulletin 87/38**

(45) Mention de la délivrance du brevet:
**27.12.89 Bulletin 89/52**

(84) Etats contractants désignés:
**BE CH DE ES GB LI**

(56) Documents cités:
**FR-A- 1 198 836**
**FR-A- 1 512 209**

(73) Titulaire: **FRAMATOME, Tour Fiat 1, Place de la Coupole, F-92400 Courbevoie(FR)**

(72) Inventeur: **Coppolani, Pierre, 22, rue Labrouste, F-75015 Paris(FR)**
Inventeur: **Henry, Jean-Marc, 35, rue de Belfort, F-92400 Courbevoie(FR)**
Inventeur: **Eisele, Jean, 1, rue de Barr, F-67300 Schiltigheim(FR)**
Inventeur: **Savary, Pierre, 15, rue Charles Grad, F-67000 Strasbourg(FR)**

(74) Mandataire: **Metz, Paul, Cabinet METZ PATNI 95, rue de la Ganzau, F-67100 Strasbourg(FR)**

## Description

La présente invention se rapporte à un amortisseur hydraulique de mouvements de battements pour soupapes et organes analogues de distribution de fluide.

Une soupape, de même que tout organe hydraulique de décharge ou de distribution habituelle ou occasionnelle de fluide, comporte un élément obturateur actionné en ouverture par une surpression du fluide ou commandé en ouverture à partir d'un dispositif extérieur.

Pour une soupape, lorsque la pression ne dépasse pas une valeur jugée normale, le clapet obture l'orifice de décharge, sous l'effet de la poussée d'un ressort taré. L'élévation de pression provoque l'ouverture rapide ou progressive du clapet, engendrant rapidement une baisse de pression consécutive à la décharge.

Lorsque la surpression reste peu élevée, le clapet, après son ouverture, a tendance à se refermer suite à la baisse de pression provoquée par son ouverture.

Les conditions restant identiques, à la fermeture du clapet suit une élévation de pression, provoquant une nouvelle ouverture et ainsi de suite.

Le phénomène n'étant pas cumulatif, engendre des mouvements alternatifs appelés battements.

Selon les valeurs de pression, la fréquence de ces battements peut augmenter et provoquer des chocs répétés du clapet sur son siège et des échauffements prohibitifs engendrant des détériorations, sources du mauvais fonctionnement de la soupape, de fuites et même de blocages en position ouverte allant jusqu'au bris de la commande.

Ces mauvais fonctionnements peuvent engendrer des dommages importants à l'installation et à tout l'environnement.

On connaît des dispositifs d'amortissement permettant d'éviter, ou tout au moins de réduire suffisamment les mouvements de battements des soupapes.

Il existe ainsi de nombreuses réalisations mécaniques d'amortissement.

Ces associations de moyens mécaniques permettent simplement de neutraliser le phénomène de battement du clapet.

Il existe par ailleurs divers dispositifs amortisseurs à stabilisateur ou frein hydraulique.

Le brevet français 1 198 836 se rapporte à un amortisseur hydraulique comme décrit dans le préambule de la revendication 1.

Le brevet français 2 473 670 concerne une soupape de sécurité comprenant un amortisseur hydraulique entre le clapet et le ressort dont le piston du type à plateau est inséré entre la tige du clapet et la tige du ressort. Le piston délimite deux chambres de part et d'autre de ses faces, lesdites chambres étant reliées entre elles par une ou plusieurs liaison(s) simple(s) à conduit souple ou rigide.

A titre de variante, on prévoit en plus une communication entre les chambres qui s'effectue par l'intermédiaire de passages transversaux calibrés, pourvus ou non chacun d'un clapet, pour réaliser, en calibrant différemment ces passages, un amortissement différent de l'équipage mobile de la soupape à l'ouverture et à la fermeture.

Ce dispositif amortisseur manque de compensation thermique.

Par ailleurs, sa disposition même, en inversion entre le clapet et son ressort, apporte des complications au montage. De plus, il n'existe aucun repère visuel permettant d'apprécier les fuites et le manque d'huile consécutif.

Le brevet français 2 484 582 concerne un dispositif d'assistance hydraulique à stabilisateur sous la forme d'un cylindre, monté verticalement au sommet de la soupape. Dans ce cylindre, se déplace un piston rapporté à une tige solidarisée en partie supérieure à un cadre rigide extérieur se développant verticalement autour du cylindre pour assurer la liaison entre la tige de piston et la rallonge de tige de soupape. Une plaque transversale pourvue d'orifices obture à une certaine hauteur la chambre intérieure du cylindre. Cette plaque délimite en partie supérieure la course du piston et forme deux chambres à l'intérieur du cylindre, qui sont mises en communication à travers un bloc de distribution. La communication s'effectue à l'intérieur du bloc de distribution par un premier canal pourvu d'un étranglement à section variable suivi d'un deuxième canal occupé par un clapet anti-retour à bille, monté passant dans le sens chambre supérieure – chambre inférieure.

Le niveau d'huile est contrôlable au moyen de voyants vissés sur le capot du cylindre.

Ce stabilisateur permet en refoulant l'huile d'une chambre à l'autre à travers des orifices réduits de modérer la vitesse de déplacement de l'équipage mobile de la soupape éliminant ainsi les accélérations et décélérations brutales pouvant engendrer les mouvements de battement.

La stabilisation, vraisemblablement de bonne efficacité, nécessite toutefois la construction d'un cadre extérieur pour la transmission du mouvement, apportant une complication supplémentaire de réalisation. Par ailleurs, l'huile ne remplissant pas totalement les chambres, il ne s'agit pas d'un circuit fermé. Par conséquent, l'utilisation en position debout est impérative.

Dans ces dispositifs il n'est prévu ni compensation du volume d'huile dû aux fuites ou aux variations de température, ni amélioration en efficacité de l'amortissement.

Il est connu par ailleurs de compenser le volume d'huile à l'aide d'une capsule ou soufflet rempli d'un fluide gazeux susceptible de contractions ou de dilatations.

Le brevet français 2 408 771 fait état d'un ou de plusieurs volumes remplis d'un gaz, susceptibles de variations dimensionnelles, placés dans le circuit hydraulique d'un amortisseur en vue de compenser les dilatations et d'absorber les à-coups de pression.

Le but principal visé par cet ensemble d'amortissement est double. Il concerne, d'une part la compensation de variation de volume, suite à la dilatation de l'huile résultant de l'élévation de température, et d'autre part la suppression des phénomènes de cavitation en compensant les pertes de charge dues à la traversée des gicleurs de décharge lors de l'aspiration.

Or, pour supprimer ou tout au moins réduire fortement les battements d'une soupape sans perturber le fonctionnement de la soupape, l'amortissement doit être progressif et efficace.

Par ailleurs, pour garantir un fonctionnement de haute sécurité, il convient de pouvoir compenser automatiquement les fuites et de vérifier rapidement le niveau d'huile.

Finalement, la sécurité recherchée impose une ouverture rapide de la soupape et sa fermeture progressive.

La présente invention propose un amortisseur hydraulique de battements pour soupape, intégré au corps de la soupape, d'une grande efficacité et fiabilité.

A cet effet, l'amortisseur hydraulique de battements pour soupape selon l'invention, comme décrite dans la revendication 1, comprend un piston solidaire de la tige de ladite soupape, monté dans une chambre, ladite chambre se composant de part et d'autre du piston d'une grande chambre et d'une chambre de compression en communication hydraulique par un gicleur mince paroi shunté par un clapet anti retour, le piston comprenant, solidaire de l'une de ses extrémités, dans la grande chambre, un corps creux susceptible de déformations, contracté au repos par la pression du fluide hydraulique contenu dans les chambres.

On précise ci-après quelques uns des nombreux avantages procurés par l'invention:

– grande sécurité de fonctionnement;
– efficacité totale dans des conditions de températures extrêmes;
– compensation automatique des faibles fuites;
– suppression totale de la cavitation;
– simplicité de montage et de remplacement;
– dispositif de manœuvre simple et rapide;
– l'amortisseur peut être monté sans empêcher la mise en place d'une manœuvre de secours;
– dispositif extérieur d'actionnement manuel.

Les caractéristiques et d'autres 1avantages de l'invention sont consignés dans la description qui suit, effectuée à titre d'exemple non limitatif sur un mode d'exécution en référence aux dessins accompagnants dans lesquels:

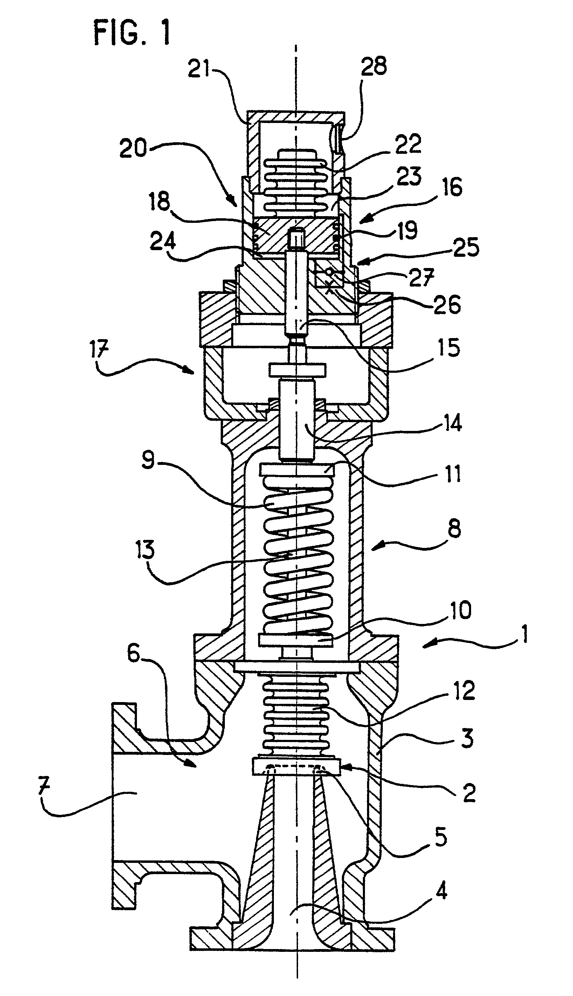

– la figure 1 est une vue en coupe de l'amortisseur selon l'invention monté sur une soupape;
– la figure 2 est une vue en coupe longitudinale de l'amortisseur seul équipé d'un mécanisme de réarmement manuel.
– la figure 3 est une vue en coupe longitudinale de l'amortisseur seul équipé d'un dispositif de commande hydraulique.

On décrira ci-après l'invention en adoptant une soupape comme exemple d'application.

Il doit être bien entendu que toutes applications équivalentes entrent dans le cadre de la présente invention. Il en est ainsi de tous les organes hydrauliques ou pneumatiques à clapet, en particulier vannes de régulation, distributeurs de sécurité et autres organes de décharge.

Une soupape 1 présente classiquement un clapet 2 monté dans un corps 3 à conduit d'arrivée 4 débouchant par un siège 5 au niveau du clapet dans une chambre 6 de décharge avec évacuation par sortie latérale 7. Le corps 3 se poursuit vers le haut par une tête de soupape 8 renfermant un ressort de rappel taré 9 entre deux flasques d'extrémité inférieur 10 et supérieur 11. Le flasque inférieur est solidaire du clapet 2 par un axe 12 et le mouvement est rappelé en partie supérieure par une tige 13 traversant le ressort taré 9 et le flasque supérieur 11. La tige 13 traverse également la paroi supérieure par une bague de guidage 14 pour être reprise par la tige de manœuvre 15 d'un dispositif d'amortissement hydraulique 16 à réarmement monté sur un bloc mécanique 17 au-dessus de la tête de soupape 8.

Le dispositif d'amortissement hydraulique représenté par ses moyens généraux sur les figures comprend un piston 18 à segments 19 solidaire de la tige de manoeuvre 15 en liaison mécanique avec le clapet 2, ledit piston se déplaçant le long d'une chambre 20 fermée en partie supérieure par un carter 21 et possédant, solidarisé, à sa face opposée à celle de la tige de manœuvre, un corps creux déformable, par exemple scus la forme d'un soufflet 22 rempli d'un fluide gazeux.

La chambre 20 se compose de deux chambres disposées de part et d'autre du piston: une grande chambre 23 occupée partiellement par le soufflet 22 et une chambre de compression 24. Conformément à l'invention, la grande chambre 23 et la chambre de compression 24 sont remplies d'un fluide hydraulique sous pression, et communiquent entre elles par une liaison hydraulique 25 comprenant un gicleur mince paroi 26 et un clapet anti-retour 27 monté en dérivation sur le gicleur disposé passant dans l'un ou l'autre sens.

Cette liaison est intérieure au piston ou au bloc mécanique, ou bien extérieure à l'ensemble.

Le but de ce clapet consiste à supprimer, dans un sens ou dans l'autre, l'effet d'amortissement apporté par le gicleur. La position du clapet anti-retour, passant dans le sens de la montée du piston, permet de ne pas freiner le mouvement d'ouverture de la soupape.

Le fluide sous pression dans la chambre maintient légèrement contracté le soufflet 22 qui permet ainsi de disposer d'un volume variable de compensation en dilatation du volume d'huile ou en pertes éventuelles par fuites.

Le carter 21 possède en partie supérieure une communication visuelle transversale sous la forme d'un hublot 28 dont le champ visuel permet de détecter le niveau de la paroi supérieure du soufflet 22 et, par conséquent, d'obtenir une information sur la quantité de fluide hydraulique.

Un dispositif extérieur d'actionnement 29 à mécanisme manuel 30 ou hydraulique 31 permet de manœuvrer par une action extérieure directe ou à distance, la prolongation de la tige de soupape ou le piston. Cette manœuvre est utilisée notamment pour le réarmement, pour le dégagement lors de l'entretien et le déblocage en cas de grippage.

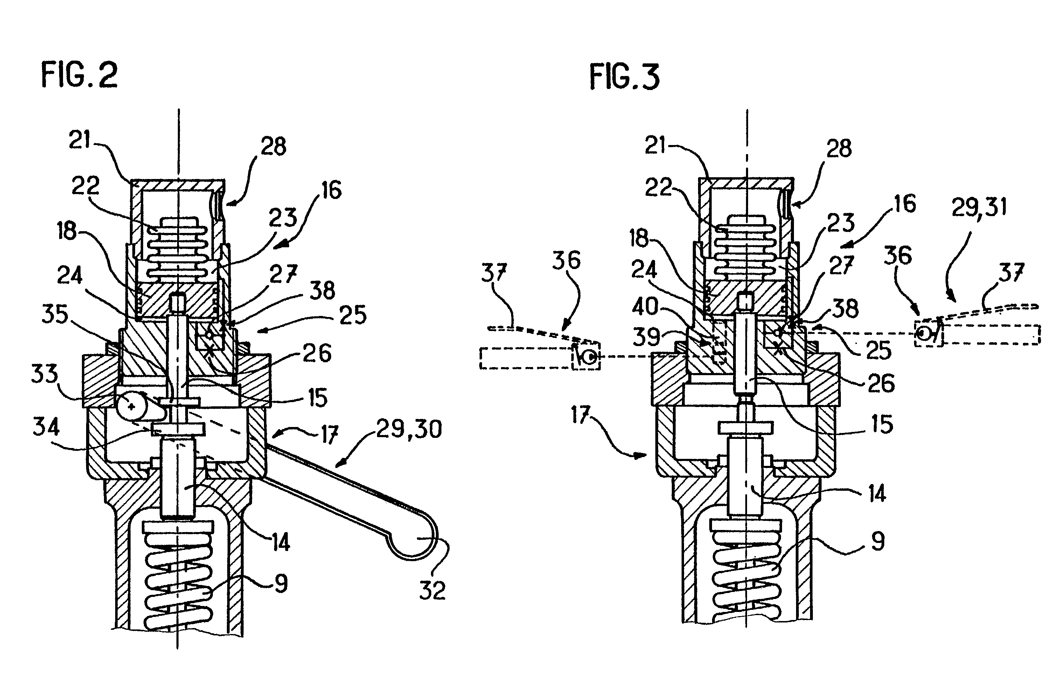

Les deux formes de réalisation de ces dispositifs d'actionnement apparaissent sur les figures 2 et 3 représentant l'amortisseur ainsi équipé.

Plus précisément, le mécanisme manuel 30 comprend un levier de manoeuvre 32 monté pivotant sur la tête de soupape. L'axe de pivotement commande une noix 33 ou autre profil de came permettant la manoeuvre vers le bas de la tige de soupape par poussée vers le bas sur une rondelle ou un disque 34, ou, inversement, la manoeuvre vers le haut par contact et poussée de la came 33 avec une rondelle supérieure 35 disposée à une faible distance du disque 34. L'intervalle entre ces deux éléments est voisin de l'épaisseur d'extrémité de came pour limiter les jeux.

Le dispositif extérieur d'actionnement à commande hydraulique 31 comprend une pompe hydraulique à main 36 à commande par levier 37.

Les deux variantes représentées simultanément sur la figure 3 permettent la levée hydraulique ou hydromécanique du piston soit directement par application d'une pression sur le piston soit indirectement par un élément mécanique extérieur.

Selon un premier mode de réalisation, la pompe à main 36 est raccordée hydrauliquement à la liaison hydraulique 25 en amont ou en aval, mais de préférence en aval tel que représenté sur la figure 3, du groupe gicleur 26 et clapet anti-retour 27.

Pour éviter l'entrée du fluide moteur dans la grande chambre 23 occupée partiellement par le soufflet 22, on prévoit sur le tronçon de la liaison hydraulique 25 entre le piquage d'entrée de la pompe à main et ladite grande chambre 23, un robinet d'isolement 38. Selon ce mode de réalisation, le fluide hydraulique injecté sous pression par la pompe à main 36 agit sur la crosse du piston pour provoquer sa montée et donc l'ouverture de la soupape par une commande extérieure.

Selon un deuxième mode de réalisation, la pompe à main 36 est reliée à un piston auxiliaire de levage 39 se déplaçant dans une chambre 40 prévue dans le bloc d'embase de l'amortisseur selon l'invention. Ce piston auxiliaire de levage contraint le piston 18 en montée par une poussée verticale réalisant ainsi une manoeuvre à partir d'une commande manuelle extérieure.

L'adjonction d'une commande extérieure par pompe auxiliaire permet d'assurer la manoeuvre à distance de la soupape.

Ces dispositifs extérieurs permettent bien entendu de réaliser la fonction de réarmement de l'amortisseur mais aussi le dégagement lors de l'entretien et le déblocage en cas de grippage.

Ils peuvent servir également d'organes de manoeuvre à distance pour satisfaire aux exigences de la réglementation et vérifier le bon fonctionnement de la soupape.

Le fonctionnement général de l'amortisseur de battements s'avère le suivant.

L'amortisseur étant chargé en huile sous pression, le clapet de la soupape se soulève par une surpression occasionnelle et tend à battre. Le piston est sollicité simultanément en déplacements longitudinaux le long de la chambre.

Le premier mouvement est celui de la montée, mouvement pour lequel l'amortissement sera faible si le clapet est choisi passant dans le sens de la montée. L'ouverture s'effectue à amortissement réduit pour réaliser les conditions d'une sécurité positive.

L'efficacité d'amortissement résulte de l'association d'un piston mobile dans un fluide hydraulique sous pression avec le circuit de communication hydraulique comprenant le gicleur mince paroi.

L'huile se transvase plus ou moins facilement d'une chambre dans l'autre à chaque mouvement du piston de par l'existence du clapet anti-retour. Le passage dans le gicleur mince paroi provoque par l'écoulement laminaire un amortissement supplémentaire alors que le passage direct dans le clapet anti-retour n'introduit pratiquement aucun effet d'amortissement supplémentaire.

## Revendications

1. Amortisseur hydraulique de battements pour soupapes et analogues comprenant un piston (18) relié mécaniquement à une tige de soupape, coulissant dans une chambre (20) fermée en partie supérieure par un carter (21) et formée de deux chambres juxtaposées de part et d'autre du piston, une grande chambre (23) en partie supérieure et une chambre de compression (24) en partie inférieure remplies d'un même fluide hydraulique sous pression, caractérisé en ce que le piston possède, solidarisé à sa face libre dans la grande chambre (23), un corps creux déformable rempli d'un fluide gazeux et contracté au repos par la pression régnant dans les chambres, et en ce que lesdites chambres communiquent par une liaison hydraulique d'amortissement (25) à gicleur mince paroi (26), ledit carter comportant une communication visuelle permettant de voir la face supérieure du corps creux.

2. Amortisseur hydraulique selon la revendication 1 caractérisé en ce que le corps creux déformable est un soufflet (22).

3. Amortisseur hydraulique selon la revendication 2 caractérisé en ce que le soufflet (22) est métallique.

4. Amortisseur hydraulique selon l'une quelconque des revendications de 1 à 3 caractérisé en ce que le gicleur mince paroi (26) est shunté par un clapet anti-retour (27).

5. Amortisseur hydraulique selon les revendications précédentes caractérisé en ce qu'un dispositif d'actionnement manuel (30) à levier (32) est prévu sur la tige de soupape ou sa rallonge.

6. Amortisseur hydraulique selon les revendications 1 à 4 caractérisé en ce qu'un dispositif d'actionnement hydraulique (31) à pompe à main (36) manoeuvre le piston.

7. Amortisseur hydraulique selon la revendication 6 caractérisé en ce que la pompe à main (36) est reliée à la liaison hydraulique (25).

8. Amortisseur hydraulique selon la revendication 6, caractérisé en ce que le dispositif d'actionnement hydraulique, (31) à pompe à main (36) est relié à un piston auxiliaire (39) agissant directement sur le piston de l'amortisseur (18).

9. Amortisseur hydraulique selon l'une quelconque des revendications de 5 à 8 caractérisé en ce que le dispositif d'actionnement hydraulique (31) est utilisé comme commande à distance.

10. Amortisseur selon les revendications précédentes caractérisé en ce qu'il est appliqué à une soupape ou à un dispositif analogue de distribution de fluide.

**Patentansprüche**

1. Hydraulischer Dämpfer gegen das Schlagen von Ventilen und ähnlichen Organen, bestehend aus einem mechanisch mit einer Ventilspindel verbundenen Kolben (18), der sich in einer, im oberen Teil durch ein Gehäuse (21) geschlossenen Kammer (20) verschieben läßt, wobei letztere aus zwei beiderseits des Kolbens nebeneinander liegenden Kammern besteht, einer großen Kammer (23) im oberen Teil und einer Kompressionskammer (24) im unteren Teil, gefüllt mit derselben hydraulischen, unter Druck stehenden Flüssigkeit, dadurch gekennzeichnet, daß der Kolben auf seiner freien, in der großen Kammer (23) liegenden Seite, einen fest mit ihm verbundenen hohlen und verformbaren Einsatz hat, der mit einem gasförmigen Medium gefüllt und im Ruhezustand durch den in den Kammern herrschenden Druck verkürzt ist, und daß diese Kammern über ein hydraulisches Dämpfungsglied (25) in Form einer dünnwandigen Düse (26) in Verbindung stehen, wobei dieses Gehäuse eine Schauöffnung aufweist, durch welche die Oberseite des hohlen Einsatzes sichtbar ist.

2. Hydraulischer Dämpfer nach Anspruch 1, dadurch gekennzeichnet, daß der hohle verformbare Einsatz ein Balg (22) ist.

3. Hydraulischer Dämpfer nach Anspruch 2, dadurch gekennzeichnet, daß der Balg (22) aus Metall ist.

4. Hydraulischer Dämpfer nach einem der Ansprüche 1–3, dadurch gekennzeichnet, daß die dünnwandige Düse (26) mit einer Rückschlagklappe (27) parallel geschaltet ist.

5. Hydraulischer Dämpfer nach den vorhergehenden Ansprüchen, dadurch gekennzeichnet, daß auf der Ventilspindel oder auf ihrer Verlängerung eine Vorrichtung zur manuellen Betätigung (30) mit einem Hebel (32) vorgesehen ist.

6. Hydraulischer Dämpfer nach den Ansprüchen 1–4, dadurch gekennzeichnet, daß man den Kolben mittels einer Vorrichtung zur hydraulischen Betätigung (31) mit einer Handpumpe (36) verschiebt.

7. Hydraulischer Dämpfer nach Anspruch 6, dadurch gekennzeichnet, daß die Handpumpe (36) an das hydraulische Glied (25) angeschlossen ist.

8. Hydraulischer Dämpfer nach Anspruch 6 dadurch gekennzeichnet, daß die Vorrichtung zur hydraulischen Betätigung (31) mit einer Handpumpe (36) mit einem Hilfskolben (39) verbunden ist, der direkt auf den Kolben des Dämpfers (18) wirkt.

9. Hydraulischer Dämpfer nach einem der Ansprüche 5–8, dadurch gekennzeichnet, daß man die Vorrichtung zur hydraulischen Betätigung (31) als Fernbedienung benutzt.

10. Dämpfer nach den vorhergehenden Ansprüchen, dadurch gekennzeichnet, daß er an einem Ventil oder an einer analogen Vorrichtung zur Verteilung eines Mediums (Fluid) angebracht ist.

**Claims**

1. Hydraulic shock absorber for attenuating hammer in valves and the like, comprising a piston (18) mechanically connected to a valve rod, sliding in a chamber (20) closed at the top by a casing (21) and consisting of two juxtaposed chambers on either side of the piston, a large chamber (23) in the upper part and a compression chamber (24) in the lower part, both filled with one an the same pressurised hydraulic fluid: characterised in that rigid with its free face, the piston comprises in the large chamber (23) a deformable hollow body filled with a gaseous medium contracted when at rest by the pressure obtaining in the chambers and in that the said chambers communicate by a hydraulic shock-absorbing link (25) with a thin-walled nozzle (26), the said casing comprising a visual communication which makes it possible to see the upper surface of the hollow body.

2. A hydraulic shock absorber according to Claim 1, characterised in that the deformable hollow body is a bellows (22).

3. A hydraulic shock absorber according to Claim 2, characterised in that the bellows (22) is of metal.

4. A hydraulic shock absorber according to any one of Claims 1 to 3, characterised in that the thin-walled nozzle (26) is by-passed by a non-return valve (27).

5. A hydraulic shock absorber according to the preceding Claims, characterised in that a manual operating device (30) with a lever (32) is provided on the valve rod or its extension piece.

6. A hydraulic shock absorber according to Claims 1 to 4, characterised in that a hydraulic actuating device (31) with a hand pump (36) operates the piston.

7. A hydraulic shock absorber according to Claim 6, characterised in that the hand pump (36) is connected to the hydraulic link (25).

8. A hydraulic shock absorber according to Claim 6, characterised in that the hydraulic actuating device (31) with the hand pump (36) is connected to an auxiliary piston (39) acting directly on the piston of the shock absorber (18).

9. A hydraulic shock absorber according to any one of Claims 5 to 8, characterised in that the hydraulic actuating device (31) is used as a remote control.

10. A shock absorber according to the preceding Claims, characterised in that it is applied to a similar fluid distributing valve or device.

FIG. 1

FIG.2

FIG.3

EP 0 237 456 B1